(19) Europäisches Patentamt
European Patent Office
Office européen des brevets

(11) EP 2 246 692 B1

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(51) Int Cl.:
*G01N 21/15* (2006.01)   *G01N 21/31* (2006.01)

(21) Anmeldenummer: **09159152.9**

(22) Anmeldetag: **30.04.2009**

(54) **Verfahren zur Detektion von Verunreinigungen einer optischen Messküvette**

Method for detecting impurities in an optical measuring cuvette

Procédé de détection d'impuretés d'une cuvette de mesure optique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**03.11.2010 Patentblatt 2010/44**

(73) Patentinhaber:
• **F.Hoffmann-La Roche AG**
**4070 Basel (CH)**
Benannte Vertragsstaaten:
**AT BE BG CH CY CZ DK EE ES FI FR GB GR HR HU IE IS IT LI LT LU LV MC MK MT NL NO PL PT RO SE SI SK TR**
• **Roche Diagnostics GmbH**
**68305 Mannheim (DE)**
Benannte Vertragsstaaten:
**DE**

(72) Erfinder: **Schlaminger, Michael**
**8010 Graz (AT)**

(74) Vertreter: **Babeluk, Michael**
**Patentanwalt**
**Dipl.-Ing. Mag. Michael Babeluk**
**Mariahilfer Gürtel 39/17**
**1150 Wien (AT)**

(56) Entgegenhaltungen:
**EP-A- 0 915 338    EP-A- 1 046 901**

**Beschreibung**

Gebiet der Erfindung:

Die Erfindung betrifft ein Verfahren zur Detektion von Verunreinigungen einer optischen Messküvette eines Spektralfotometers, vorzugsweise eines Oxymeters zur Bestimmung von Hämoglobinderivaten, in welcher Messküvette zusätzlich zu mindestens einer Probenmessung zur Gewinnung eines Probenspektrums $I(\lambda)$ zumindest eine Referenzmessung mit einer Referenzflüssigkeit zur Gewinnung eines Referenzspektrums $I_0(\lambda)$ durchgeführt wird.

Stand der Technik:

Spektralfotometer bzw. Spektrometer sind im Allgemeinen Vorrichtungen zur Darstellung eines Spektrums und bieten die Möglichkeit, optische Spektren aufzunehmen und auszuwerten. Spektrometer werden u.a. in der chemischen und medizinischen Analytik verbreitet eingesetzt, um Bestandteile einer Flüssigkeit aufgrund ihrer spektralen Eigenschaften bestimmen zu können. Hierzu eingesetzte Spektrometer arbeiten häufig nach dem Polychromatorprinzip, d.h. bei diesen Verfahren wird das eingestrahlte Licht erst nach dem Durchgang durch die in der Messküvette vorliegende Probenflüssigkeit mittels eines Polychromators in seine spektralen Bestandteile aufgespaltet, welche somit gleichzeitig auf ein Detekroarray abgebildet werden können. Hierdurch kann das gesamtes Spektrum gleichzeitig (simultan) registriert werden (Optical Multichannel Analyzer (OMA) oder Multi Channel Spectrometer (MCS)). Moderne Multi Channel Spektrometer können ein komplettes Spektrum sehr schnell an die AuswerteElektronik übergeben. Ein typisches Einsatzgebiet für Spektrometer ist beispielsweise die analytische Bestimmung von Hämoglobinderivaten im Blut, die sogenannten CO-Oximetrie. Ein Beispiel für ein solches Spektrometrie-Modul ist das COOX-Modul des cobas b 221 (Roche Diagnostics GmbH, Deutschland) zur Bestimmung von Bilirubin (Bili), Totalhämoglobin (tHb), und der Hämoglobinderivate Oxyhämoglobin (O2Hb), Desoxyhämoglobin (HHb), Carboxyhämoglobin (COHb) und Methämoglobin (MetHb). Die Hämoglobinderivate und Bilirubin werden hierbei spektrofotometrisch auf der Basis des Lambert-Beer'schen Gesetzes (siehe Gleichung (1)) bestimmt. Das optische System dieses CO-Oximetriemoduls besteht im Wesentlichen aus Halogenlampe, Spalt, Küvettenhalter mit einer Messküvette sowie Polychromator und Detektionseinheit. Das Licht einer Halogenlampe wird mit Hilfe eines Lichtleiters zum Küvettenhalter gelenkt. In der Messküvette wird das Licht teilweise von der Probe absorbiert, teilweise durchgelassen. Die Absorption ist charakteristisch für die Zusammensetzung der Probe. Durch einen weiteren Lichtleiter wird das durchgelassene Licht zum Polychromator geleitet, wo es in seine spektralen Bestandteile aufgespaltet und auf der Oberfläche eines fotosensitiven Empfängers (CCD-Sensor) abgebildet wird. Aus dem daraus resultierenden elektrischen Signal werden die Absorption und schlussendlich die Konzentrationen der Hämoglobinderivate berechnet. Um eine hohe Zuverlässigkeit im Betrieb zu erreichen, wird der Polychromator mit einer eingebauten Spektrallichtquelle kalibriert.

Wie schon oben erwähnt, basiert die Konzentrationsberechung der Hämoglobinderivate auf der gemessenen Summenabsorption der Einzelkomponenten bei mehreren Wellenlängen:

$$A_\lambda = \log(I_{0\lambda}/I_\lambda) = \Sigma\varepsilon_{i\lambda}*c_i*d \qquad\qquad (1)$$

wobei gilt:

$\lambda$     Wellenlänge
i     ite Einzelkomponente
$A$     Absorption
$I_0$     Referenzintensität: Intensität des durchgelassenen Lichts der mit Wasser oder Luft gefüllten Küvette
$I$     Probenintensität: Intensität des durchgelassenen Lichtes der mit einer Messflüssigkeit (z.B. Blut) gefüllten Küvette
$\varepsilon$     Extinktionskoeffizient
$c$     Konzentration
$d$     Schichtdicke (Innendurchmesser der Küvette).

Sowohl die Messflüssigkeit, als auch die Referenzflüssigkeit oder das Referenzmedium (z.B. nicht absorbierende Flüssigkeit) werden zeitlich gestaffelt in der gleichen Küvette vermessen; d.h. zwischen den beiden Messpunkten muss die Küvette gereinigt und anschließend mit Referenzflüssigkeit befüllt werden. Genau darin liegt ein Nachteil des aktuellen Messverfahren: Wird die Probe bzw. Messflüssigkeit nicht vollständig aus der Küvette gewaschen, oder es bildet sich mit der Zeit - nach mehreren Messzyklen mit jeweils einer Probenmessung und zumindest einer Referenzmessung - eine optisch interferierende Schicht in der Messküvette, so bleibt dies unerkannt. Durch solche Verschmutzungen wird das Licht der Referenzmessung zusätzlich absorbiert, das heißt $I_0$ entspricht nicht mehr dem reinen Referenzspektrum (Spektrum der Anregungslichtquelle, eventuell überlagert durch spektrale Effekte des optischen Systems (z.B. Filter) sowie durch charakteristische Absorptionen der unverschmutzten mit Referenzlösung gefüllten Küvette), sondern ist zusätzlich mit den Absorptionen der Verunreinigung überlagert. Bleibt dieser Fehler unerkannt, so wird die Absorption A der Probe falsch berechnet, was unweigerlich zu falschen Konzentrationswerten führt.

In diesem Zusammenhang ist aus der EP 0 210 417 B1 ein Verfahren zur spektrofotometrischen Bestimmung der Konzentration einer Anzahl von Hämoglobinderivaten im Vollblut bekannt geworden, bei welchem die durch die Blutprobe verursachte Trübung berücksichtigt wird. Die Blutprobe wird mit einer Anzahl n von einzelnen Wellenlängen beaufschlagt, die wenigstens gleich der Anzahl der zu bestimmenden Hämoglobinderivate plus eins ist, wobei die Bestimmung der Konzentrationen auf der Basis der Absorptionswerte bei den einzelnen Wellenlängen durch Verwendung von Sätzen von vorbestimmten Koeffizienten, die die Absorptionscharakteristiken der einzelnen Hämoglobinderivate bei jeder der Wellenlängen und die Absorptionscharakteristiken von wenigstens einer Trübungskomponente bei jeder der Wellenlängen repräsentieren, erfolgt. Die Konzentrationen der Hämoglobinderivate werden dann auf der Basis eines Gleichungssystems mit einer n x n-Matrix berechnet, wobei die durch das Vollblut bewirkte Trübung mathematisch wie eine der zu berechnenden Konzentrationen der Hämoglobinderivate behandelt wird. Eine Anwendung dieses Verfahrens auf optisch interferierende Schichten in der Messküvette, beispielsweise Ablagerungen vorangehender Blutproben, ist jedoch nicht zielführend, da die sich ergebenden Konzentrationswerte von den Messwerten einer aktuellen Probenmessung nicht unterscheidbar wären.

Weiters sind Verfahren und Vorrichtungen zu Überwachung von Verunreinigungszuständen unterschiedlicher Flüssigkeiten auch aus anderen technischen Gebieten bekannt, die beispielsweise in der DE 103 05 093 A1 beschrieben werden. Hier wird ein Verfahren zur Bestimmung bzw. Überwachung von Verunreinigungszuständen in Flüssigkeiten vorgestellt, bei welchem eine Weißlicht-LED und mindestens eine infrarote bzw. ultraviolette Strahlung emittierende Injektionslumineszenzdiode verwendet wird. Das Verfahren nutzt die Modifikation des Emissionsspektrums der weißen LED aus, wobei Veränderungen der Peakwellenlängen, der Verhältnisse der Peaks der Injektionslumineszenz zum Peak der Fotolumineszenz, der selektiven Absorptionen, der Anregung zur Fluoreszenz, der Intensität der Peakwellenlängen und der integralen Emissionen sowie der Vergleich der Daten mit modifizierten Spektren genutzt werden, die mit Hilfe eines faseroptischen Kompaktspektrometers registriert werden. Nachteilig bei diesem Verfahren ist die Tatsache, dass zusätzliche Lichtquellen benötigt werden und das Verfahren an herkömmlichen Spektralspektrometern ohne Adaptionen nicht anwendbar ist.

Aus der EP 0 915 338 A2 ist ein fotometrisches Analyseverfahren für wässrige Lösungen bekannt, bei welchem in einer Messküvette zusätzlich zu einer Probenmessung zur Gewinnung eines Probenspektrums zumindest eine Referenzmessung zur Gewinnung eines Referenzspektrums durchgeführt wird, wobei das Referenzspektrum mit einem bekannten Sollspektrum verglichen wird. Aus dem Vergleich der beiden Spektren wird eine auf der Verschmutzung der Messküvette beruhende Absorption berechnet und dem Nutzer angezeigt.

Aus der EP 1 046 901 A2 ist ein Verfahren zur automatischen Reinigung von optoelektronischen Sensorsystemen zur Stoffanalyse bekannt, bei welchen im Falle einer stärkeren Verschmutzung ein Schwellwertgeber anspricht und automatisch einen Reinigungskreislauf aktiviert.

Aufgabe der Erfindung ist es, ein Verfahren zur Detektion von Verunreinigungen einer optischen Messküvette eines Spektralfotometers anzubieten, welches es erlaubt, ohne apparativen oder messtechnischen Mehraufwand eine Aussage über die Güte (Richtigkeit) einer Referenzmessung zu treffen, um bei mangelhaften Referenzmessungen rasch und ggf. automatisch weitere Maßnahmen einleiten zu können.

Erfindungsgemäße Lösung:

Diese Aufgabe wird erfindungsgemäß dadurch gelöst, dass ein vordefiniertes Musterspektrum $I_p$ ausgewählt wird, welches zumindest einen typischen Absorptionspeak einer oder mehrerer Verunreinigungen aufweist, dass der spektrale Verlauf der von den Verunreinigungen bewirkten Fehlabsorption aus dem Referenzspektrum $I_0(\lambda)$ in Bezug auf das Sollspektrum $I_{0soll}(\lambda)$ bestimmt wird, dass der spektrale Verlauf der Fehlabsorption mit dem ausgewählten Musterspektrum $I_p$ mittels Faltung, vorzugsweise mittels Kreuzkorrelation, verglichen wird und dass der aus der Faltung gewonnene Kurvenverlauf einer gewichteten Bewertung unterzogen und daraus die Vergleichsparameter gewonnen werden, sowie dass in Abhängigkeit von vorgegebenen Schwellwerten der Vergleichsparameter automatisch entschieden wird, ob eine Verunreinigung der Messküvette vorliegt.

Das Sollspektrum $I_{0soll}(\lambda)$ kann durch Messung einer bekanntermaßen nicht verunreinigten, mit der Referenzflüssigkeit oder mit Gas, beispielsweise mit Umgebungsluft, gefüllten Messküvette ermittelt werden. Dies kann beispielsweise dann durchgeführt werden, wenn eine neue Messküvette erstmalig in ein Spektralfotometer eingesetzt wird. Hierbei kann zunächst das Spektrum der luftgefüllten Messküvette ermittelt werden und in nachfolgenden Schritten das Spektrum einer mit Referenzflüssigkeit gefüllten Messküvette ermittelt werden.

Bevorzugt wird das Sollspektrum $I_{0soll}(\lambda)$ aus einer Erstmessung einer ungebrauchten, neu in das Spektralfotometer eingesetzten, mit der Referenzflüssigkeit gefüllten Messküvette gewonnen.

Das Sollspektrum kann auch werkseitig bei der Herstellung der Messküvetten erfasst werden, und in elektronischer Form, beispielsweise als Computerchip, an der Messküvette befestigt sein und durch das Spektralfotometer automatisch eingelesen werden.

Das Sollspektrum $I_{0soll}(\lambda)$ kann aus einer Vielzahl von Einzelmessungen mehrerer optischer Messküvetten gemittelt werden.

Als Referenzflüssigkeit wird erfindungsgemäß eine Funktionsflüssigkeit des Spektralfotometers, vorzugsweise eine Reinigungsflüssigkeit verwendet, die im zur Detektion von Verunreinigungen herangezogenen Spektralbereich im Wesentlichen keine Absorptionen aufweist.

Beim Vorliegen einer Verunreinigung der Messküvette, vorzugsweise nach einer quantitativen Bewertung der Verunreinigung, wird erfindungsgemäß zumindest eine der folgenden Maßnahmen - bevorzugt automatisch - eingeleitet:

- Wiederholung von Waschschritten der Messküvette;

- zusätzliche Waschfunktion gegebenenfalls mit speziellen Waschlösungen und vom Standardzyklus abweichenden Waschzyklen;

- Ausgabe von Fehlermeldungen am Spektralfotometer;

- Korrektur der ausgegebenen Messwerte anhand der ermittelten Fehlabsorption aufgrund der Verunreinigung;

- Anforderung eines Service-Technikers;

- Sperre des Spektralfotometers für weitere Messungen;

- Ausgabe von Empfehlungen, wie beispielsweise Tausch der Messküvette oder der Küvetteneinheit.

Das erfindungsgemäße Verfahren eignet sich vor allem bei der Verwendung von Mehrwegküvetten oder Durchflussküvetten, in welchen zeitlich aufeinanderfolgend eine Mehrzahl von Messungen (beispielsweise von Probenlösungen, aber auch von Kalibrations- oder QC-Lösungen) durchgeführt werden.

Das erfindungsgemäße Verfahren wird anhand von Diagrammen näher erläutert. Es zeigen:

Fig. 1 mehrere Referenzspektren $I_0(\lambda)$ der Messküvette im Wellenlängenbe- reich $\lambda$ zwischen 450 nm und 700 nm, wobei auf der Ordinate die Intensität I aufgetragen ist und der Verschmutzungsgrad 1/x mit Hilfe von um den Faktor x (10 bis 10000) verdünnten Blutproben simuliert wurde;

Fig. 2 die zu den Spektren gemäß Fig. 1 ermittelten Rest-/Fehlabsorptionen A zum jeweiligen Verschmutzungsgrad (0, 1/10 bis 1/10000), im Wellenlängenbereich $\lambda$ zwischen 450 nm und 700 nm;

Fig. 3 das Beispiel einer Signalverbesserung durch Kreuzkorrelation bei einer Verunreinigung von 1/5000;

Fig. 4 das Beispiel einer Bewertung einer Kreuzkorrelation;

Fig. 5 und Fig. 6 zeigen das Ergebnis einer Simulationsmessung;

Fig. 7 charakteristische Peaks (Absorptionsspitzen) der Hämoglobinderivate HHb, O2Hb, COHb und MetHb, bzw. der Farbstoffe D1 bis D3 einer Qualitätskontrollflüssigkeit;

Fig. 8 das Ausschneiden der Musterkurve (Template) aus dem gemessenen Absorptionsverlauf mit Hilfe der ersten Ableitung des Absorptionsver- laufs; und

Fig. 9 das Ergebnis einer Kreuzkorrelation in dreidimensionaler Darstellung.

a) Bewertung der Verunreinigung anhand des Kurvenverlaufs des Referenzspektrums:

Der spektrale Kurvenverlauf des gemessenen Referenzspektrums $I_0(\lambda)$ kann z.B. mit dem spektralen Kurvenverlauf des Sollspektrums $I_{0soll}(\lambda)$ verglichen und die Vergleichsparameter vorzugsweise durch Normierung der spektralen Kurvenverläufe gewonnen werden. Beispielsweise können die Vergleichsparameter durch Differenz- oder Quotientenbildung der spektralen Kurvenverläufe gewonnen werden.

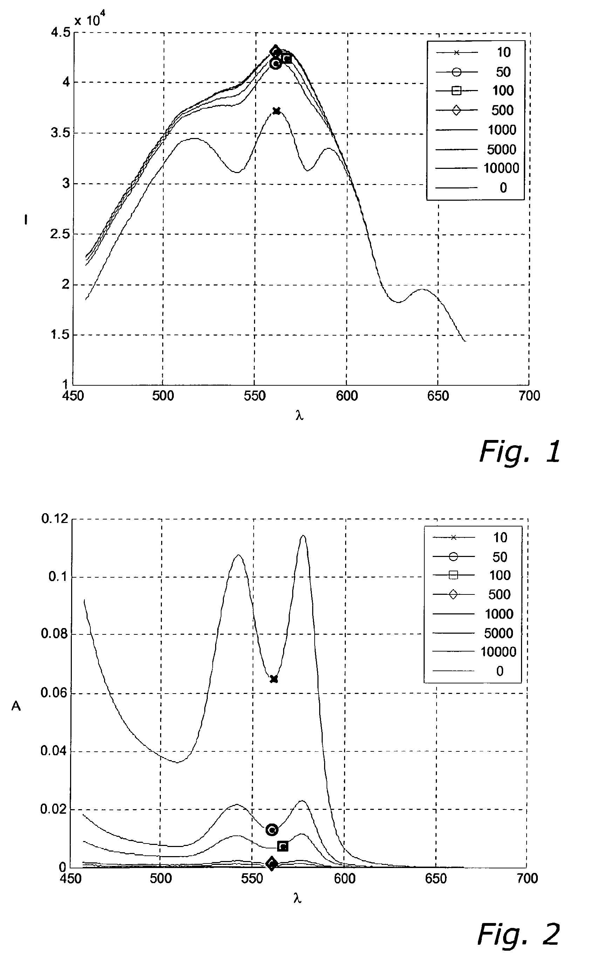

Aus Fig. 1 und Fig. 2 ist erkennbar, dass die Rest- bzw. Fehlabsorption dieser Methode bei geringer Verschmutzung nicht sehr sensitiv ist und bereits bei einem Verschmutzungsgrad von 1/1000 oder 1/5000 Messgrenzen auftreten. Die äußere Hüllkurve in Fig. 1 zeigt ein Sollspektrum $I_{0soll}(\lambda)$ einer sauberen Messküvette.

In diesem Zusammenhang sei darauf hingewiesen, dass für die Ermittlung der Absorptionswerte für jede Wellenlänge die Probenintensität I und die Referenzgröße $I_0$ zum Messzeitpunkt bekannt sein müssen, was Probleme bereiten kann. Die systembedingten, im Zeitintervall zwischen der Bestimmung von $I_0$ und I eintretenden Veränderungen, wie das Driften der Intensität der Anregungslichtquelle, führen zu sich verändernden Werten von $I_0$ und damit zu fehlerbehafteten Absorptionswerten.

Als Gegenmaßnahme können zur Bestimmung von $I_0$ nach jeder Probenmessung zwei Referenzmessungen $I_{01}$ und $I_{02}$ in genau definierten Abständen durchgeführt werden. Auf Basis dieser Referenzmessungen kann durch lineare Extrapolation der tatsächliche Wert der Lichtintensität zum Zeitpunkt der Probenmessung für jede Wellenlänge angenähert werden.

Zur Bewertung des spektralen Verlaufs können sowohl der extrapolierte, driftkorrigierte Wert $I_0$, (zum Zeitpunkt $t_0$), als auch ein Rohwert $I_{01}$, $I_{02}$ , .. (zu den Zeitpunkten $t_1$, $t_2$, ...) verwendet werden.

b) Bewertung der Verunreinigung mittels tHb - Treshholding:

Das Referenzspektrum $I_0(\lambda)$ kann auch analog einem Probenspektrum $I(\lambda)$ einer Probenauswertung gemäß einem vorgegebenen Auswertealgorithmus des Spektralfotometers, beispielsweise einer tHb-Bestimmung in einem Oxymeter, unterzogen werden, wobei als Referenzspektrum das Sollspektrum $I_{0soll}(\lambda)$ verwendet wird und die aus der Probenauswertung gewonnenen Messwerte, beispielsweise die Werte für einzelne Hämoglobinderivate oder der tHb-Messwert, als Vergleichsparameter herangezogen werden.

Als Ergebnis wird die Summe der Einzelkonzentrationen (= tHb Wert) erhalten. Je weiter der tHb-Wert von 0 abweicht, desto größer ist der Anteil der Verschmutzung im gemessenen Referenzspektrum.

Ein verschmutztes Referenzspektrum $I_0(\lambda)$ entspricht im Wesentlichen einer stark verdünnten Probenmessung. Berechnet man mit $I_{0mess}$ und der Bezugsgröße $I_{0soll}$ nach dem Lambert-Beerschen Gesetz

$$A = \log (I_{0soll}/I_{0mes}) \qquad\qquad (2)$$

die durch die Verschmutzung entstandene Absorption, so kann auch diese mittels Regression berechnet werden. Der so ermittelte tHb-Wert muss unter einem Schwellwert (treshhold) liegen damit die Küvette für die Messung freigegeben wird, andernfalls werden automatisch die weiter vorne beschriebenen Maßnahmen eingeleitet.

Vorteilhafterweise kann bei dieser Verfahrensvariante auf bereits vorhandene Rechenroutinen zurückgegriffen werden.

c) Bewertung der Verunreinigung mittels Mustererkennung:

Gemäß der Erfindung ist vorgesehen, dass ein vordefiniertes Musterspektrum $I_p$ ausgewählt wird, welches zumindest einen typischen Absorptionspeak einer oder mehrerer Verunreinigungen aufweist, dass der spektrale Verlauf der von den Verunreinigungen bewirkten Fehlabsorption aus dem Referenzspektrum $I_0(\lambda)$ in Bezug auf das Sollspektrum $I_{0soll}(\lambda)$ bestimmt wird, dass der spektrale Verlauf der Fehlabsorption mit dem ausgewählten Musterspektrum $I_p$ mittels Faltung, vorzugsweise mittels Kreuzkorrelation, verglichen wird und dass der aus der Faltung gewonnene Kurvenverlauf einer gewichteten Bewertung unterzogen und daraus Vergleichsparameter gewonnen werden.

Die Methode der Mustererkennung kann in fünf Unterschritte eingeteilt werden. Eine schematische Darstellung in Form eines Flussdiagramms findet sich in der untenstehenden Tabelle, wobei sowohl die Standardabfolge (fett), als auch optionale Abläufe (strichliert) abgebildet sind.

## Mustererkennung

| Eingangsgrößen | Funktion | Ergebnis |
|---|---|---|

**1. Template wählen**

- Probenmessung Imess
- Referenzmessung I0,1
- Referenzmessung I0,2
- I0mess

*Standard-Messzyklus*

- Ausschneiden des Haupt-Absorptions-Verlaufs (definierter Bereich um Maximum)
- Direkt verwenden
- Mittlere Probenbelastung über Zeit (Mittelwert d. ermittelten Verläufe)
- Werkseitig vordefinierter (allgemein gültiger) Verlauf

**1. Template t wählen**

**2. Absorption berechnen**

- I0soll Aus vorhergehenden Messungen bekannt
- I0soll Werkseitig vordefinierter Verlauf
- $Apd = \log(I0soll/I0mess)$

**2. Absorption Apd berechnen**

**3. Kreuzkorrelation**

- Template t
- Absorption Apd
- Berechnen der Kreuzkorrelation

**3. Kreuzkorrelation**

**4. Bewerten d. Korrelats**

- Ergebnis Kreuzkorrelation
- Vorverarbeitung (linearen Trend entfernen, Filter, Fenster ausschneiden)
- Gewichtete Bewertung von: 4.1. Position v. Min und Max 4.2. Fläche unter Kurve 4.3. Steigung

**4. Bewertung d. Korrelats (Entscheidungs-kriterien)**

**5. Entscheidungsfindung**

- Entscheidungs-kriterien
- Berechnen der Kreuzkorrelation

**5. Ergebnis (sauber? Ja/Nein)**

**6. Maßnahmen**

- Maßnahmen einleiten

**7. Ende**

Im ersten Schritt wird ein für das vorhandene optische System gültiger Kurvenverlauf (Template) gefunden, der die wichtigsten Merkmale (Absorptionsbanden) möglicher Verschmutzungen beinhaltet. Dies kann werkseitig vordefiniert, direkt oder iterativ (über Mittelwertbildung) aus der/den vorhergehenden Messung(en) bezogen werden. Durch entsprechende Definition des Tempaltes können sämtliche absorbierende Substanzen erkannt werden.

Zur Mustererkennung wird das standardmäßig erhobenen Referenzspektren $I_0(\lambda)$ und ein für das optische System gültiges Sollspektrum $I_{0soll}(\lambda)$ verwendet. $I_{0soll}(\lambda)$ kann wiederum werkseitig vordefiniert, oder iterativ aus vorhergehenden Messergebnissen bestimmt werden. In Schritt 2 wird die Absorption aus diesen beiden Eingangsgrößen bestimmt. Dieser Verlauf entspricht der durch die Verschmutzung entstandenen Fehlabsorption in der Referenzmessung.

Um den Verlauf der Absorption bewerten zu können wird im dritten Schritt diese mit der in Schritt 1 gewählten Musterkurve mittels Kreuzkorrelation verglichen.

In der Signalanalyse wird die Kreuzkorrelationsfunktion zur Beschreibung der Korrelation zweier Signale bei unterschiedlichen Zeitverschiebungen $\tau$ zwischen den beiden Signalen eingesetzt. Es gilt:

$$R_{xy}(\tau) = \lim_{T_F \to \infty} \frac{1}{T_F} \int_{-T_F/2}^{T_F/2} x(t) \cdot y(t+\tau) dt \qquad (3)$$

In der vorliegenden Anmeldung wird die Kreuzkorrelation in folgender Form verwendet, wobei über den ausgewählten Wellenlängenbereich $\lambda$min bis $\lambda$max aufsummiert wird:

$$R_{TA}(\lambda) = \Sigma\ T(\Delta\lambda)^* A_{PD}(\lambda + \Delta\lambda) \qquad (4)$$

mit

$\Delta\lambda$    summiert von $\lambda$min bis $\lambda$max

R    Ergebnis der Kreuzkorrelation

T    Template

$A_{PD}$    Fehlabsorption durch Verschmutzung

$\lambda$    aktuelle Wellenlänge.

Das Maximum der Kreuzkorrelation entspricht dem besten Fit zwischen dem Template (typische bzw. vermutete Absorptionsbanden der Verschmutzung) und der durch die Verschmutzung verursachten Fehlabsorption. Durch die "online Bestimmung" des Templates direkt aus der Probenabsorption wird die Methode noch sensitiver, da der spektrale Verlauf des Referenzspektrums $I_0(\lambda)$ gezielt nach der letzten Probenmessung untersucht wird.

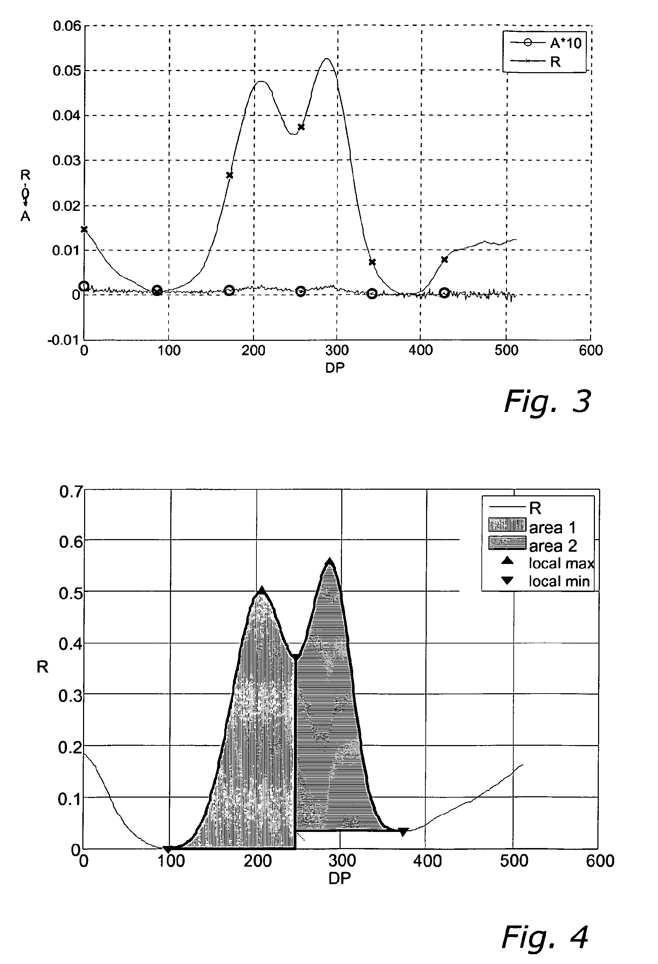

In Schritt 4 kommt es nach entsprechender Vorverarbeitung (Entfernen von linearen Trends, Filtern von Rauschanteilen im Signal) zu einer Bewertung des Kurvenverlaufs aus der Kreuzkorrelation (siehe Fig. 4).

In Fig. 3 ist das Ergebnis R der Signalverbesserung nach Anwendung der Kreuzkorrelation für einen Verschmutzungsgrad von 1/5000 dargestellt, wobei die ursprüngliche Kurve der Fehlabsorption A mit "o" und die sich nach der Korrelation ergebende Kurve R mit "x" gekennzeichnet ist. Auf der x-Achse dieser Darstellungen sind als DP-Werte Datenpunkte (data points) des Spektrums aufgetragen, welche mit Wellenlängen korrelieren. So sind im in Fig. 3 und Fig. 4 dargestellten Fall 512 Datenpunkte über den Wellenlängenbereich von ca. 459 nm - ca. 666 nm verteilt.

Erfindungsgemäß kann ein messtechnisch interessanter Teilbereich des Kurvenverlaufes ausgeschnitten (siehe "region of interest" in Fig. 4 fett dargestellt), einer gewichteten Bewertung unterzogen und daraus die Vergleichsparameter gewonnen werden. Diese Verfahrensvariante ist sehr sensitiv, es können damit mit hoher Sicherheit Verunreinigungen festgestellt werden, die einer Probenverdünnung von 1/14000 entsprechen.

Erfindungsgemäß können beispielsweise folgende Vergleichsparameter ausgewählt und daraus auf die Art und den Grad der Verunreinigung geschlossen werden:

-    die Positionen von Minima und Maxima innerhalb des durch die Faltung gewonnenen Kurvenverlaufes (siehe Fig. 4);

-    die Flächen (area 1 und 2) unter dem durch die Faltung gewonnenen Kurvenverlauf; und/oder

- die Steigung zwischen ausgewählten Punkten des durch die Faltung gewonnenen Kurvenverlaufes.

Auf Grund dieser Kriterien wird in Schritt 5 die Entscheidung über die Güte der Referenzmessung getroffen und entsprechende Maßnahmen eingeleitet.

Erfindungsgemäß wird im Falle des Vorliegens keiner Verunreinigung oder einer zu korrigierenden Verunreinigung (beispielsweise durch einen zusätzlichen Waschvorgang) in der Messküvette gemäß den oben angeführten Kriterien eine spektrometrische Bestimmung von Bestandteilen einer medizinischen Probe durchgeführt.

Beispiele für konkrete Ausführungsformen der Erfindung:

Der Mustererkennungs-Algorithmus wurde im sichtbaren Bereich zuwischen 459 und 666 nm eingesetzt. Als Messlichtquelle wird dabei eine Halogenlampe verwendet.

Zur Funktionsüberprüfung werden stark verdünnte Proben an einem Spektralfotometer (cobas b 221) des Anmelders vermessen. Die ausgegebenen Probenspektren werden dann als Eingangsgröße $I_0$ für das erfindungsgemäße Verfahren verwendet.

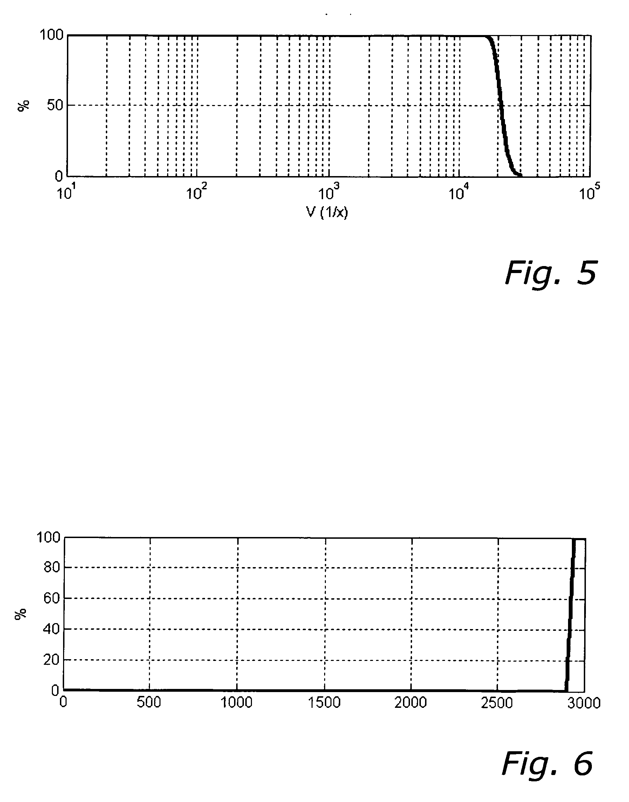

Für höhere Verdünnungen wird auf simulierte Daten zurückgegriffen. Auf diese Weise kann die Funktion der Mustererkennung in einem Verdünnungs-Bereich von $10^{-3}$ bis $10^{-5}$ nachgewiesen werden. Fig. 5 zeigt über einen Verdünnungs-bereich V(1/x) mit x = $10^1$ bis $10^5$ den Prozentanteil aller Proben, die als verschmutzt erkannt werden. Bis zu einem Verdünnungsgrad von 1/14000 werden 100% aller Proben richtig als verschmutzt erkannt, sowie 90 % bei einer Verdünnung von 1/22000.

Die Gegenprobe gemäß Fig. 6 zeigt keine 'Falsch - Positiv' Ergebnisse in 10000 simulierten Datensätzen.

Beispiel: Finden der Muster-Kurve

Für eine gewichtete Verstärkung signifikanter Absorptionsmuster, bzw. für das Anheben der SNR durch die Kreuzkorrelations-Funktion (KKF) ist ein ausreichendes a priori - Wissen über die Form des zu findenden Musters im Zielsignal von Vorteil.

Es ist naheliegend, dass Bereiche hoher Absorption mehr Auswirkung bei einer Verschmutzung haben als Bereiche niedriger Absorption. Das hat aber auch den Vorteil, dass der Verlauf (typische Peak-Form) genau dieser Bereiche stärker im normierten Signal ausgeprägt ist. Daher sollen bei der Mustererkennung genau diese Bereiche detektiert werden.

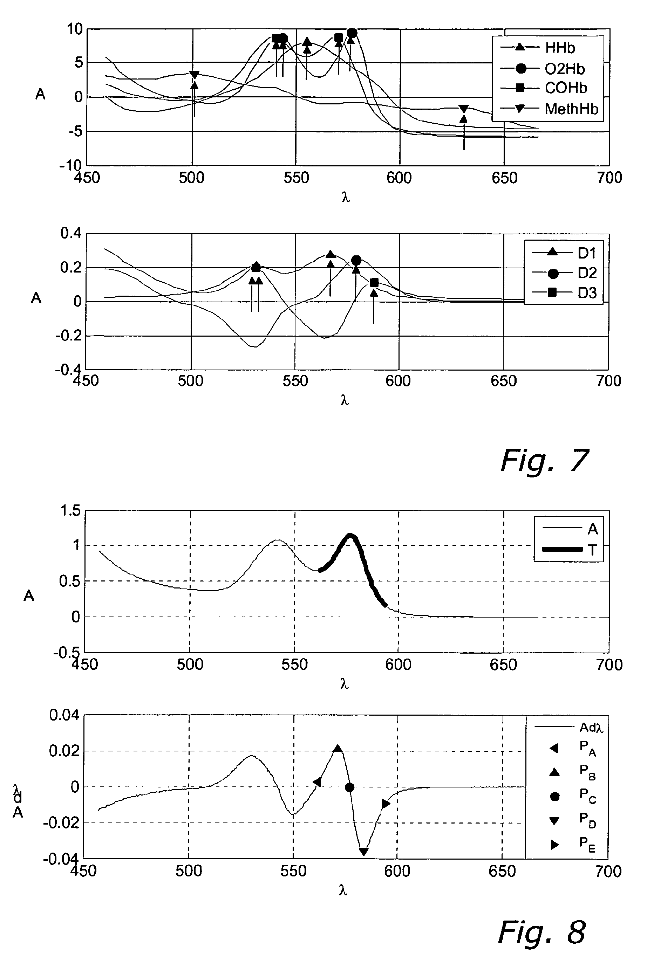

Für eine Verschmutzung durch eine Blutprobe (oberer Teil des Diagramms in Fig. 7), bzw. durch eine Kalibrations- bzw. Qualitätskontrolllösung (unterer Teil des Diagramms in Fig. 7) können die charakteristischen Peaks der Derivate (bzw. der unterschiedlichen Farbstoffe D1 bis D3) aus den Referenzspektren abgeleitet werden.

Mit Ausnahme des MetHbs liegen alle Peaks (für Blut, Kalibrations- und QC-Lösung) im Zentrum des Spektrums ($520nm<\lambda<580nm$) und heben sich deutlich vom restlichen Spektrum ab. Um die so definierten Peaks zur Kreuzkorrelation verwenden zu können, müssen diese ausgeschnitten (maskiert) werden, wobei hier zwei Möglichkeiten angedacht sind:

**Methode 1:** "detection by thresholding the derivative"

Die Musterkurve (Template) wird direkt aus den Referenzspektren, bzw. aus der vorgelagerten Messung bestimmt. Das hat den Vorteil, dass das Template voll mit dem zu findenden Muster übereinstimmt, wodurch die Sensitivität für dieses eine spezielle Muster erhöht wird. Geht man davon aus, dass eine Verschmutzung durch eine vorgelagerte Messung hervorgerufen wird, so ist diese Methode sicher optimal.

Zum Ausschneiden des Templates kann gemäß Fig. 8 vorgegangen werden, wobei im oberen Teil des Diagramms der Absorptionsverlauf A mit gefundenem Template T (fett dargestellt) und im unteren Teil des Diagramms die erste Ableitung Adλ des Kurvenverlaufs dargestellt ist (Punkt $P_C$: Maximum des Absorptionsverlaufs, Punkt $P_B/P_D$: Maximum/Minimum um $P_C$, Punkt $P_A/P_E$: linker/rechter Endwert für Template:

- Starte beim Maximum im Spektrum (Nulldurchgang in der Ableitung, Punkt $P_C$);

- Suche nach dem Maximum in der Ableitung Richtung Anfang (Punkt $P_B$);

- Suche nach dem Minimum in der Ableitung Richtung Ende (Punkt $P_D$);

- Von dieser Position aus gehe so lange nach rechts/links bis der gefundene Wert unter eine gewisse Fraktion des Maximalwerts fällt (Punkt $P_A$, $P_E$).

Durch Anpassung der Schwellwerte kann der gefundene Kurvenverlauf (Start-und Endwert, links- bzw. rechts-Bewegung auf der Zielfunktion) für diese spezifische Anwendung optimiert werden.

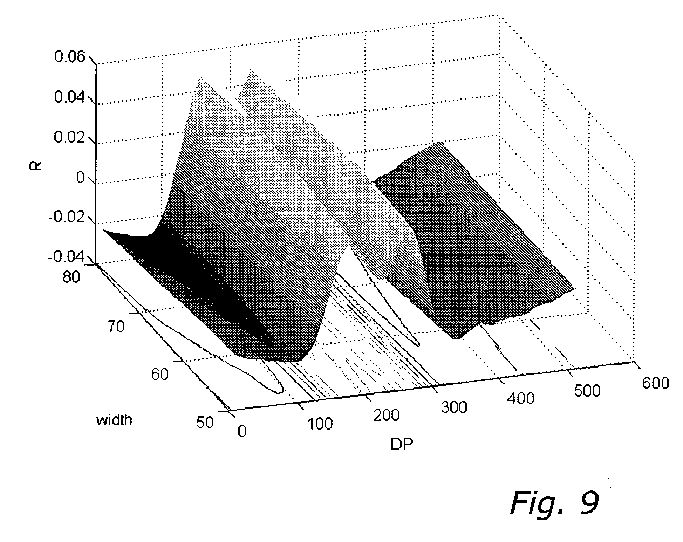

In Fig. 9 wird eine, mit einer Blutmessung bei nativer Derivatsverteilung und mittlerem tHb verunreinigte, auf ein Sollspektrum $I_{0soll}(\lambda)$ normierte Referenzmessung $I_0(\lambda)$ mit dem gemäß oben definierter Methode gefundenen Template T kreuzkorreliert. (Ergebnis R der KKF: erstes Eingangssignal = Verschmutzung

(mittlerer tHb, c nativ, n=6000), zweites Eingangssignal = ausgeschnittenes Template, Variation der Kurvenform über Schwellwert-Variation)

Durch die Kreuzkorrelation kann das Signal-Rausch-Verhältnis deutlich angehoben und der Verlauf der verursachenden Absorption wiedergefunden werden. Die Variation der Kurvenform des Templates über die Schwellwert-Anpassung hat nur geringe Auswirkungen auf das Ergebnis der KKF. Es zeigt sich ein leichtes Verkippen der Maxima der KKF (Verhältnis Peak1 zu Peak2) und ein Ansteigen des Absolut-Betrags, was aber durch die zunehmende Anzahl an Datenpunkten im Template erklärt werden kann (Summe in jedem Punkt wird größer).

**Methode 2:** Annähern des Templates über Parabel

Es wird angenommen, dass alle signifikanten Peaks einer verunreinigenden Absorption durch entsprechende Anpassung der Polynom-Koeffizienten über eine Parabel angenähert werden können,

Die quadratische Funktion (Polynom zweiter Ordnung) zur Beschreibung einer Parabelfunktion lautet:

$$y = a_2x^2 + a_1x + a_0 \qquad\qquad (5)$$

Um die optimale Parabelform zu finden, können die Koeffizienten $a_1$ und $a_0$ vernachlässigt werden. Da die Parabel nach unten geöffnet sein muss, muss folglich $a_2$ negativ angenommen werden. Zur Optimierung des Öffnungswinkels (-breite) wird die Anzahl der zur Berechnung verwendeten Datenpunkte (DP) variiert. Negative Werte können durch Addition des Minimums der Funktion unterdrückt werden. Zur besseren Vergleichbarkeit werden die so ermittelten Werte auf das Maximum des Kurvenverlaufs normiert.

Ziel ist es nun ein Mittel zwischen dem Hub des Signals und der Sensitivität der KKF zu finden, wobei sich folgendes zeigt: Je größer die Anzahl der verwendeten Datenpunkte (width), desto höher ist der erzielte Hub, desto geringer ist jedoch auch die Sensitivität der Kreuzkorrelations-Funktion. Je sensitiver das System, desto besser werden bekannte Muster verstärkt (und umgekehrt).

Vergleicht man die Methoden 1 und 2, so kommt man zu folgendem Schluss: Durch das Ausschneiden der Musterkurve T direkt aus den Referenzspektren, bzw. aus zeitlich vorgelagerten Messungen wird zwar bei vergleichbarer Sensitivität (die zu verstärkenden Peaks zeichnen sich deutlich ab) ein etwas größer Hub erreicht, als mit der Annäherung des Musters über eine Parabel, was aber nur für den einen bestimmten Fall (nämlich den durch das Template T beschriebenen) gilt. Werden beide Methode auf unabhängige Spektren angewendet, so entsprechen sich die Maxima der KKF annähernd.

Da die zum Ausschneiden des Templates verwendete Absorption verrauscht ist, hat auch das Template an sich einen dementsprechenden Rauschanteil, der bei der Kreuzkorrelation mit dem Zielsignal einen nicht zu vernachlässigbaren Einfluss auf das Ergebnis der KKF hat. Das Rauschen der quadratischen Funktion (Parabel) ist jedoch null, wodurch auch der Rauschanteil von $R_{xy}$ minimiert wird.

**Patentansprüche**

1. Verfahren zur Detektion von Verunreinigungen einer optischen Messküvette eines Spektralfotometers, vorzugsweise eines Oxymeters zur Bestimmung von Hämoglobinderivaten, in welcher Messküvette zusätzlich zu mindestens einer Probenmessung zur Gewinnung eines Probenspektrums $I(\lambda)$ zumindest eine Referenzmessung mit einer Referenzflüssigkeit zur Gewinnung eines Referenzspektrums $I_0(\lambda)$ durchgeführt wird, wobei das Referenzspektrum $I_0(\lambda)$ mit einem bekannten, der Messküvette zugeordneten Sollspektrum $I_{0soll}(\lambda)$ verglichen wird und Vergleichsparameter gewonnen werden, **dadurch gekennzeichnet, dass** ein vordefiniertes Musterspektrum $I_p$ ausgewählt wird, welches zumindest einen typischen Absorptionspeak einer oder mehrerer Verunreinigungen aufweist, dass der spektrale Verlauf der von den Verunreinigungen bewirkten Fehlabsorption aus dem Referenzspektrum $I_0(\lambda)$ in Bezug auf das Sollspektrum $I_{0soll}(\lambda)$ bestimmt wird, dass der spektrale Verlauf der Fehlabsorption mit dem ausgewählten Musterspektrum $I_p$ mittels Faltung, vorzugsweise mittels Kreuzkorrelation, verglichen wird und dass der aus der Faltung gewonnene Kurvenverlauf einer gewichteten Bewertung unterzogen und daraus die Vergleichsparameter gewonnen werden, sowie dass in Abhängigkeit von vorgegebenen Schwellwerten der Vergleichsparameter automatisch entschieden wird, ob eine Verunreinigung der Messküvette vorliegt.

2. Verfahren nach Anspruch 1, **dadurch gekennzeichnet, dass** nur ein messtechnisch interessanter Teilbereich des Kurvenverlaufes, einer gewichteten Bewertung unterzogen und daraus Vergleichsparameter gewonnen werden.

3. Verfahren nach Anspruch 1 oder 2, **dadurch gekennzeichnet, dass** als Vergleichsparameter die Positionen von Minima und Maxima innerhalb des durch die Faltung gewonnenen Kurvenverlaufes gewählt werden und daraus auf die Art und den Grad der Verunreinigung geschlossen wird.

4. Verfahren nach Anspruch 1 oder 2, **dadurch gekennzeichnet, dass** als Vergleichsparameter die Fläche unter dem durch die Faltung gewonnenen Kurvenverlauf gewählt wird und daraus auf die Art und den Grad der Verunreinigung geschlossen wird.

5. Verfahren nach Anspruch 1 oder 2, **dadurch gekennzeichnet, dass** als Vergleichsparameter die Steigung zwischen ausgewählten Punkten des durch die Faltung gewonnenen Kurvenverlaufes gewählt wird und daraus auf die Art und den Grad der Verunreinigung geschlossen wird.

6. Verfahren nach einem der Ansprüche 1 bis 5, **dadurch gekennzeichnet, dass** das Sollspektrum $I_{0soll}(\lambda)$ durch Messung einer bekanntermaßen nicht verunreinigten, mit der Referenzflüssigkeit gefüllten Messküvette ermittelt wird.

7. Verfahren nach einem der Ansprüche 1 bis 6, **dadurch gekennzeichnet, dass** das Sollspektrum $I_{0soll}(\lambda)$ aus einer Erstmessung einer ungebrauchten, neu in das Spektralfotometer eingesetzten, mit der Referenzflüssigkeit gefüllten Messküvette gewonnen wird.

8. Verfahren nach einem der Ansprüche 1 bis 7, **dadurch gekennzeichnet, dass** das Sollspektrum $I_{0soll}(\lambda)$ aus einer Vielzahl von Einzelmessungen gemittelt wird.

9. Verfahren nach einem der Ansprüche 1 bis 8, **dadurch gekennzeichnet, dass** als Referenzflüssigkeit eine im zur Detektion von Verunreinigungen hergezogenen Spektralbereich im Wesentlichen nicht-absorbierende Funktionsflüssigkeit, vorzugsweise eine Reinigungsflüssigkeit, des Spektralfotometers verwendet wird.

10. Verfahren nach einem der Ansprüche 1 bis 9, **dadurch gekennzeichnet, dass** beim Vorliegen einer Verunreinigung, vorzugsweise nach einer quantitativen Bewertung der Verunreinigung, zumindest eine der folgenden Maßnahmen eingeleitet wird:

   • Wiederholung von Waschschritten der Messküvette;
   • zusätzliche Waschfunktion gegebenenfalls mit speziellen Waschlösungen und vom Standardzyklus abweichenden Waschzyklen;
   • Ausgabe von Fehlermeldungen am Spektralfotometer;
   • Korrektur der ausgegebenen Messwerte anhand der ermittelten Fehlabsorption aufgrund der Verunreinigung;
   • Anforderung eines Service-Technikers;
   • Sperre des Spektralfotometers für weitere Messungen;
   • Ausgabe von Empfehlungen, wie beispielsweise Tausch der Messküvette oder der Küvetteneinheit.

11. Verfahren zur spektrometrischen Bestimmung von Bestandteilen einer medizinischen Probe, umfassend ein Verfahren zur Detektion von Verunreinigungen einer optischen Messküvette nach einem der Ansprüche 1 bis 10, **dadurch gekennzeichnet, dass** in der Messküvette - im Falle des Vorliegens keiner Verunreinigung oder einer zu korrigierenden Verunreinigung - eine spektrometrische Bestimmung von Bestandteilen einer medizinischen Probe durchgeführt wird.

**Claims**

1. Method for the detection of contaminants of an optical measuring cuvette of a spectrophotometer, preferably an oximeter for determining hemoglobin derivatives, in which measuring cuvette, in addition to at least one sample measurement to obtain a sample spectrum $I(\lambda)$, at least one reference measurement is performed using a reference liquid to obtain a reference spectrum $I_0(\lambda)$, the reference spectrum $I_0(\lambda)$ being compared to a known target spectrum

$I_{0soll}(\lambda)$, which is associated with the measuring cuvette, and comparison parameters being obtained, **characterised in that** a predefined pattern spectrum $I_p$ is selected, which has at least one typical absorption peak of one or more contaminants, the spectral curve of the incorrect absorption caused by the contaminants from the reference spectrum $I_0(\lambda)$ in relation to the target spectrum $I_{0soll}(\lambda)$ is determined, the spectral curve of the incorrect absorption is compared to the selected pattern spectrum $I_p$ using folding, preferably using cross-correlation, and the curve shape obtained from the folding is subjected to a weighted evaluation and the comparison parameters are obtained there from, and deciding automatically as a function of predefined threshold values of the comparison parameters whether a contamination of the measuring cuvette exists.

2.  Method according to claim 1, **characterised in that** only a subarea of the curve shape of interest in measuring technology is subjected to a weighted evaluation and comparison parameters are obtained there from.

3.  Method according to claim 1 or 2, **characterised in that** the positions of minima and maxima within the curve shape obtained by the folding are selected as the comparison parameters and the type and the degree of the contamination are concluded there from.

4.  Method according to claim 1 or 2, **characterised in that** the area under the curve shape obtained by the folding is selected as the comparison parameter and the type and the degree of the contamination are concluded there from.

5.  Method according to claim 1 or 2, **characterised in that** the slope between selected points of the curve shape obtained by the folding is selected as the comparison parameter and the type and the degree of the contamination are concluded there from.

6.  Method according to any of claim 1 to 5, **characterised in that** the target spectrum $I_{0soll}(\lambda)$ is obtained by measuring a measuring cuvette, which is known to be uncontaminated and is filled with the reference liquid.

7.  Method according to any of claim 1 or 6, **characterised in that** the target spectrum $I_{0soll}(\lambda)$ is obtained from an initial measurement of an unused measuring cuvette, which is newly inserted into the spectrophotometer and is filled with the reference liquid.

8.  Method according to any of claims 1 to 7, **characterised in that** the target spectrum $I_{0soll}(\lambda)$ is averaged from a plurality of individual measurements.

9.  Method according to any of claims 1 to 8, **characterised in that** a functional liquid, preferably a cleaning liquid, of the spectrophotometer, which is essentially non-absorbent in a spectral range used for detecting contaminants, is used as the reference liquid.

10. Method according to any of claims 1 to 9, **characterised in that** in the event of the existence of a contamination, preferably after a quantitative evaluation of the contamination, at least one of the following measures is initiated:

    • repetition of washing steps of the measuring cuvette;
    • additional washing function optionally having special washing solutions and washing cycles deviating from the standard cycle;
    • output of error messages on the spectrophotometer;
    • correction of the output measured values on the basis of the ascertained incorrect absorption because of the contamination;
    • request for a service technician;
    • blocking of the spectrophotometer for further measurement;
    • output of suggestions, such as replacement of the measuring cuvette or the cuvette unit.

11. Method for the spectrometric determination of components of a medical sample, comprising a method for the detection of contamination of an optical measuring cuvette according to any of claims 1 to 10, **characterised in that** a spectrometric determination of components of a medical sample is performed in the measuring cuvette - if there is no contamination or a contamination to be corrected.

**Revendications**

1. Procédé de détection de contaminations d'une cuvette de mesure optique d'un spectrophotomètre, de préférence d'un oxymètre pour déterminer des dérivés de l'hémoglobine, cuvette dans laquelle est effectuée, outre au moins une mesure d'échantillon pour obtenir un spectre d'échantillon $I(\lambda)$, au moins une mesure de référence avec un liquide de référence pour obtenir un spectre de référence $I_0(\lambda)$, ledit spectre de référence $I_0(\lambda)$ étant comparé à un spectre de consigne $I_{0soll}(\lambda)$ connu, associé à la cuvette de mesure, permettant d'obtenir des paramètres de comparaison, **caractérisé en ce qu'**un spectre modèle $I_p$ prédéfini est sélectionné, lequel présente au moins un pic typique d'absorption d'une ou de plusieurs contaminations, **en ce que** le profil spectral de la malabsorption causée par les contaminations est déterminé à partir du spectre de référence $I_0(\lambda)$ par rapport au spectre de consigne $I_{0soll}(\lambda)$, **en ce que** le profil spectral de la malabsorption est comparé par convolution, de préférence par corrélation croisée, au spectre modèle $I_p$ et **en ce que** le profil de la courbe obtenue par la convolution est soumis à une évaluation pondérée, permettant d'obtenir les paramètres de comparaison, et **en ce qu'**en fonction de valeurs seuils prédéfinies des paramètres de comparaison, il est décidé automatiquement de la présence d'une contamination de la cuvette de mesure.

2. Procédé selon la revendication 1, **caractérisé en ce que** seule une zone partielle de la courbe présentant un intérêt technique est soumise à une évaluation pondérée, permettant d'obtenir des paramètres de comparaison.

3. Procédé selon la revendication 1 ou 2, **caractérisé en ce que** l'on choisit comme paramètres de comparaison les positions de minima et maxima à l'intérieur du profil de la courbe obtenue par la convolution et on en tire des conclusions sur la nature et le degré de la contamination.

4. Procédé selon la revendication 1 ou 2, **caractérisé en ce que** l'on choisit comme paramètres de comparaison la surface sous le profil de la courbe obtenue par la convolution et on en tire des conclusions sur la nature et le degré de la contamination.

5. Procédé selon la revendication 1 ou 2, **caractérisé en ce que** l'on choisit comme paramètres de comparaison la pente entre des points sélectionnés du profil de la courbe obtenue par convolution et on en tire des conclusions sur la nature et le degré de la contamination.

6. Procédé selon l'une des revendications 1 à 5, **caractérisé en ce que** l'on détermine le spectre de consigne $I_{0soll}(\lambda)$ par mesure d'une cuvette de mesure dont on sait qu'elle n'est pas contaminée et qui est remplie avec le liquide de référence.

7. Procédé selon l'une des revendications 1 à 6, **caractérisé en ce que** l'on obtient le spectre de consigne $I_{0soll}(\lambda)$ à partir d'une première mesure d'une cuvette de mesure inutilisée, nouvellement mise en place dans le spectrophotomètre et remplie avec le liquide de référence.

8. Procédé selon l'une des revendications 1 à 7, **caractérisé en ce que** l'on détermine le spectre de consigne $I_{0soll}(\lambda)$ à partir d'une pluralité de mesures individuelles.

9. Procédé selon l'une des revendications 1 à 8, **caractérisé en ce que** l'on utilise comme liquide de référence un liquide fonctionnel du spectrophotomètre, substantiellement non absorbant dans la région spectrale utilisée pour la détection de contaminations, de préférence un liquide de nettoyage.

10. Procédé selon l'une des revendications 1 à 9, **caractérisé en ce qu'**en présence d'une contamination, de préférence après une évaluation quantitative de la contamination, on initie au moins l'une des mesures suivantes :

    • répétition d'étapes de lavage de la cuvette de mesure ;
    • fonction de lavage supplémentaire, le cas échéant avec des solutions de lavage spéciales et des cycles de lavage différents du cycle standard ;
    • sortie de messages d'erreur sur le spectrophotomètre ;
    • correction des mesures de sortie à l'aide de la malabsorption déterminée due à la contamination ;
    • demande d'un technicien S.A.V. ;
    • blocage d'utiliser le spectrophotomètre pour d'autres mesures ;
    • diffusion de recommandations telles que, par exemple, échange de la cuvette de mesure ou de l'unité de cuvette.

11. Procédé de détermination spectrométrique de constituants d'un échantillon médical, comprenant un procédé de détection de contaminations d'une cuvette de mesure optique selon l'une des revendications 1 à 10, **caractérisé en ce que** l'on procède dans la cuvette de mesure - en cas d'absence d'une contamination ou de présence d'une contamination à corriger - à une détermination spectrométrique de constituants d'un échantillon médical.

*Fig. 1*

*Fig. 2*

Fig. 3

Fig. 4

*Fig. 5*

*Fig. 6*

Fig. 7

Fig. 8

*Fig. 9*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0210417 B1
- DE 10305093 A1
- EP 0915338 A2
- EP 1046901 A2